# EUROPÄISCHE PATENTSCHRIFT

(11) **EP 0 472 931 B1**
(45) Veröffentlichungstag und Bekanntmachung des Hinweises auf die Patenterteilung: **28.09.1994**
(21) Anmeldenummer: 91112734.8
(22) Anmeldetag: 29.07.1991
(51) Int. Cl.: B29B 7/74, B29B 7/84

(54) **Vorrichtung und Verfahren zur Herstellung von Gummimischungen**
Device and method for making rubber mixtures
Dispositif et procédé pour la fabrication de mélanges de caoutchouc

(30) Priorität: 29.08.1990 DE 4027261
(43) Veröffentlichungstag der Anmeldung: 04.03.1992
(73) Patentinhaber: Continental Aktiengesellschaft, 30165 Hannover (DE); Peter, Julius, Dr., 1130 Wien (AT)
(72) Erfinder: Weckerle, Günter, W-3410 Northeim (DE); Peter, Julius, Dr., A-1130 Wien (AT)
(74) Vertreter: Depmeyer, Lothar

(56) Entgegenhaltungen:
- EP-A- 0 277 558
- FR-A- 2 134 549
- FR-A- 2 371 282
- US-A- 2 680 264
- US-A- 2 923 967
- PATENT ABSTRACTS OF JAPAN, Band 11, Nr. 120 (M-580)[2567], 15. April 1987;& JP-A-61 261 008 (KOBE STEEL) 19-11-1986

## Beschreibung

Die Erfindung betrifft eine Vorrichtung zur Herstellung von Kautschukmischungen nach dem Oberbegriff des Patentanspruches 1. Die Erfindung bezieht sich ferner auf ein Verfahren zur Herstellung von Kautschukmischungen.

Eine Vorrichtung der oben genannten Art ist aus der EP-A-277 558 bekannt.

Bei der Herstellung von Kautschukmischungen können aus diesen Mischungen austretende Dämpfe und Gase entstehen, die arbeitsmedizinisch bedenklich sind. Um das Bedienungspersonal vor diesen Dämpfen und Gasen zu schützen, ist die bekannte Vorrichtung so ausgebildet, daß die Beförderung des Mischgutes vom Grund- zum Fertigmischer unter Staub- und Luftabschluß erfolgt. Eine derartige Konstruktion ist jedoch nur dann sinnvoll, wenn die erwähnten Gase und Dämpfe nur in geringem Maße anfallen.

Der Erfindung liegt daher die Aufgabe zugrunde, die eingangs erwähnte Vorrichtung so auszubilden, daß mit vergleichsweise geringem technischen Aufwand die erwähnten Dämpfe und Gase nahezu vollkommen entfernt werden können.

Diese Aufgabe wird erfindungsgemäß durch die in Patentanspruch 1 angegebenen Merkmale gelöst.

Den Absaugöffnungen sind Absaugstutzen oder Absaugkanäle zugeordnet, welche mit entsprechenden Unterdruckerzeugern beliebiger Art in Verbindung stehen. Dabei können diese Absaugöffnungen in den Wandungen der eigentlichen Mischkammer des Fertigmischers angeordnet sein; vorzugsweise werden sie jedoch in der Wandung des dem Fertigmischer vorgeschalteten Überführungskanals angebracht, weil dort die Anbringung von Durchbrüchen einfacher ist.

Die so abgezogenen Gase und Dämpfe können dann durch Ausfrieren oder eine Gaswäsche entfernt werden.

Zweckmäßige Ausgestaltungen der Erfindung ergeben sich aus den Unteransprüchen.

Die Anordnung der Absaogöffnungen in Verbindung mit der eingangs erwähnten Vorrichtung, und zwar unterhalb des die Grundmischung erstellenden Mischers ist deshalb von besonderer Bedeutung und von Vorteil, weil der Fertigmischer stempellos und praktisch ohne Überdruck arbeitend oben offen ist und weil ferner der Dampf- bzw. Gasaustritt aus der Kautschukmischung durch das günstige Oberflächen/Volumenverhältnis im im Inneren des Fertigmischers und dessen langsame Arbeitsgeschwindigkeit ( Rotorendrehzahl ) begünstigt wird.

Da ausserdem der lichte Querschnitt des Fertigmischers bzw. seines Überführungskanals nicht zu gross ist, ist der für die Evakuierung erforderliche Leistungsaufwand gering. Eine weitere Verringerung ist jedoch dann noch möglich, wenn oberhalb der Absaugöffnungen eine den Überführungskanal bzw. die Öffnung des Fertigmischers verschliessende Klappe vorgesehen wird, die wahlweise von einer Ruhestellung in die Schliesstellung und in umgekehrter Richtung geschwenkt bzw. bewegt werden kann. Durch diese Klappe wird ein abgeschlossener Raum geschaffen, dessen Evakuierung über die Absaugöffnungen erfolgt. Nach dem Beschicken des Fertigmischers mit der im Grundmischer anfallenden Mischung und der Zugabe der reaktiven Füllstoffe wird die erwähnte Klappe geschlossen, um die Absaugung durchzuführen. Nach Fertigstellung der Mischung wird die Klappe geöffnet, damit der Fertigmischer erneut beschickt werden kann.

Weitere Einzelheiten der Erfindung werden anhand der Zeichnung erläutert, in der Ausführungsbeispiele der Erfindung dargestellt sind. Es zeigen :
- Fig. 1: einen senkrechten Schnitt durch eine Vorrichtung zur Herstellung von Kautschukmischungen,
- Fig. 2 und 3: je eine Einzelheit des erwähnten Überführungskanals im senkrechten Schnitt und
- Fig. 4: ebenfalls eine Einzelheit des Überführungskanals im senkrechten Schnitt, jedoch im Vergleich zu Fig. 2 und 3 auf der gegenüberliegenden Seite des Kanals.

Der Stempelkneter 1 hat oben einen Arbeitszylinder 9 zum Heben und Senken eines Stempels 10, der zum Beschicken der Mischkammer 13 in seine obere Endstellung gemäss Zeichnung gefahren und zum Schliessen der Mischkammer 13 nach unten bewegbar ist. Die zur Bildung der Grundmischung dienenden Stoffe werden im Sinne des Pfeiles 2 der Mischkammer 13 über einen Speisetrichter 12 zugeführt. Nach der Beschickung wird der Stempel 10 so weit abgesenkt, dass er die Mischkammer 13 mit den beiden hierin befindlichen Rotoren 14 nach oben hin dicht abschliesst. Die Mischkammer 13 wird in üblicher Weise zur Seite hin durch Troghälften 15 abgeschlossen. Zudem können in den Elementen des Stempelkneters 1 Kühlkanäle vorgesehen sein.

Der Grundmischer wird nach unten hin durch einen mittels Arbeitszylinder 16 verschwenkbaren Sattel 17 abgeschlossen; seine Spitze 17' ragt in die Mischkammer 13 hinein.

Nach Fertigstellung der Grundmischung wird die Mischkammer 13 durch Klappen des Sattels 17 geöffnet und so entleert. Dabei fällt die Grundmischung frei herab und gelangt dabei über einen senkrecht nach unten gerichteten Überführungskanal 22 über den stets offenen Einlass 18 in den Fertigmischer 4 bzw. seine Mischkammer 19 mit den beiden Rotoren 20.

Der somit ebenfalls als Kneter ausgeführte Fertigmischer 4 hat im Vergleich zum Stempelkneter 1 eine wesentlich grössere Mischkammer 19; auch die Rotoren 20 laufen wesentlich lamgsamer; diese Massnahmen sind vorgesehen, um die Abkühlung des Mischgutes herbeizuführen.

Während die Übergabe der Mischungen vom Grundmischer 1 zum Fertigmischer 4 im Sinne des Pfeiles 3, also in senkrechter Richtung geschieht, werden die zur Herstellung der Fertigmischung erforderlichen reaktiven Stoffe im Sinne des Pfeiles 5 von der Seite her zugeführt.

Ist die Kautschukmischung fertiggestellt, wird der Klappsattel 21 nach unten abgeklappt, damit ein Entleeren im Sinne des Pfeiles 6 stattfinden kann. Alsdann wird die Kautschukmischung auf einer Walze oder einer Austragsschnecke weiter verarbeitet.

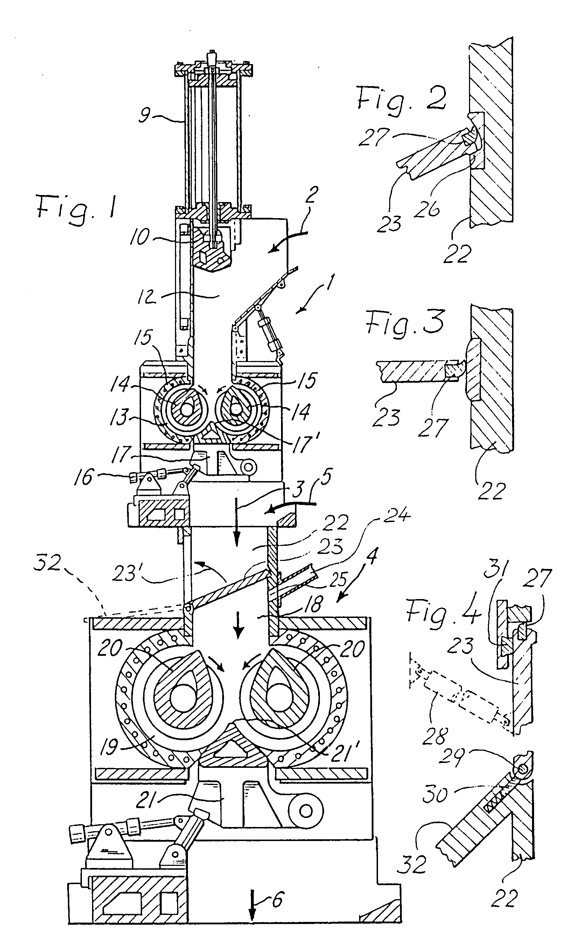

Dem Überführungskanal 22 ist eine um eine waagerechte Achse verschwenkbare Klappe 23 zugeordnet, die in der Stellung gemäss Fig. 1 den Überführungskanal 22 dicht verschliessen kann, zum Überführen der Kautschukmischung natürlich hochgeklappt ist ( Pfeil 23' ) und dabei eine Seitenwandung des Überführungskanals 22 bilden kann ( senkrechte Stellung der Klappe 23 ). Zwischen der Klappe 23 und der Mischkammer 19 mündet zudem in den Überführungskanal 22 ein schräg nach oben gerichteter Rohrstutzen 24, der über eine beliebige Leitung an eine Vakuumpumpe od. dgl. angeschlossen ist. Dieser Sauganschluss ist deshalb schräg verlaufend angeordnet, weil er so ausserstande ist, herabfallende Mischung aufzunehmen. Auch die Öffnungen 25 im Überführungskanal 22 haben aus diesen Gründen einen Schräganstieg.

Die Klappe 23 wird geschlossen und der Raum zwischen Klappe 23 und Mischgut wird evakuiert, wenn der im Fertigmischer 4 befindlichen Kautschukmischung die reaktiven Stoffe zugeführt sind. Die dann entstehenden schädlichen Dämpfe und Gase werden jetzt abgesaugt und können durch Ausfrieren oder eine Gaswäsche an anderer Stelle entfernt werden.

Weil die Rotoren 20 nur langsam drehen im Vergleich zu den Rotoren 14 und weil zudem innerhalb des Fertigmischers 4 - auch im Vergleich zum Grundmischer 1 - grössere Volumina mit grossen freien Oberflächen der Mischungen gegeben sind, wird ein Entfernen der erwähnten Gase und Dämpfe begünstigt und erleichtert, und zwar in kurzer Zeit. Die so gefertigten Mischungen sind frei von leicht flüchtigen Bestandteilen und können problemlos auch bei erhöhten Temperaturen weiterverarbeitet werden.

Aus Festigkeitsgründen und aus Gründen einer guten Abdichtung verläuft die Klappe 23 von ihrer Schwenkachse aus gesehen schräg nach oben. Am freien Ende liegt sie auf einem festen Widerlager 26 des Überführungskanals 22 auf. Zudem ist eine elastische Dichtungsleiste 27 vorgesehen, die am freien Klappenende befestigt ist und mit Spannung innen am Überführungskanal 22 anliegt. Sofern die Geschlossenstellung der Klappe 23 durch andere Widerlager sichergestellt ist, kann sie gemäss Fig. 3 in der Wirkstellung auch waagerecht verlaufen und nur dichtend anliegen.

Fig. 4 zeigt die in der senkrechten Stellung ( Ruhestellung ) befindliche Klappe 23, die durch einen gestrichelt wiedergegebenen Arbeitszylinder 28 verschwenkt werden kann. Im Bereich der Schwenkachse 29 ist ein unter Federspannung stehender Dichtungskörper 30 vorgesehen, um im Anlenkbereich eine ausreichende Abdichtung herbeizuführen. Zudem liegt die Rückseite der Klappe 23 oben an einem elastischen Anschlag 31 des Überführungskanals 22 an. Dabei liegt die geöffnete Klappe 23 in einer Ausnehmung, damit der Materialstrom innerhalb des Überführungskanals 22 nicht behindert wird.

Ausserhalb des Überführungskanals 22 hinter der Schwenkachse 29 befindet sich noch eine nach hinten unten abfallende Schräge 32, die evtl. nachfallendes Material abführt.

Es sei erwähnt, dass weitere Öffnungen 25 vorgesehen sein können; ferner können diese ggfs. auch die oben gelegenen Wandungen der Mischkammer 19 durchsetzen, wenngleich auch die Öffnungen 25 im Überführungskanal 22 einfacher anzubringen sind. Zudem ist auch eine Klappe 23 dann nicht zwingend, wenn der Überführungskanal 22 ohnehin vergleichsweise geschlossen und daher leicht evakuierbar ist. Aber auch hier ergeben sich bessere und einfachere Möglichkeiten, wenn eine hermetisch abschliessende Klappe 23 im Sinne der Zeichnung benutzt wird. Alle diese Massnahmen zielen immer darauf ab, dass der Einmischprozess der reaktiven Stoffe im Fertigmischkneter unter gleichzeitiger Absaugung und/oder Evakuierung durchgeführt wird.

## Patentansprüche

1. Vorrichtung zur Herstellung von Kautschukmischungen mit einem chargenweise arbeitenden Stempelkneter als Grundmischer (1) und einem darunter befindlichen, ebenfalls chargenweise arbeitenden Fertigmischer (4), der im Vergleich zum Grundmischer (1) ein größeres Fassungsvermögen aufweist und zu dem vom Grundmischer (1) aus ein im wesentlichen senkrechter Überführungskanal (22) für die vom Grundmischer (1) gefertigte Grundmischung zur Abgabe in die Rotoren (20) aufweisende Mischkammer (19) des Fertigmischers (4) führt, dadurch gekennzeichnet, daß die Vorrichtung oberhalb des mit der Kautschukmischung ausgefüllten Teiles der Mischkammer (19) des Fertigmischers (4) mit einer oder mehreren Absaugöffnungen (25) in den Hohlraumwandungen versehen ist, wobei die Absaugöffnungen (25) entweder die Wandungen der Mischkammer (19) durchsetzen oder im Überführungskanal (22) angebracht sind.

2. Vorrichtung nach Anspruch 1, dadurch gekennzeichnet, daß die Absaugöffnungen (25) bzw. die zugehörigen Leitungen (24) schräg nach oben in der Weise verlaufen, daß ihr dem Überführungskanal (22) zugekehrter Teil am weitesten unten liegt.

3. Vorrichtung nach Anspruch 1, dadurch gekennzeichnet, daß den die Absaugöffnungen (25) bildenden Leitungen (24) Gaswäscher und/oder Friereinrichtungen zugeordnet sind, um die flüchtigen Anteile aus dem abgesaugten oder evakuierten Volumen zu entfernen.

4. Vorrichtung nach Anspruch 1, dadurch gekennzeichnet, daß der Überführungskanal (22) oberhalb der Absaugöffnungen (25) dicht verschließbar ist.

5. Vorrichtung nach Anspruch 4, dadurch gekennzeichnet, daß der Überführungskanal (22) durch eine Klappe (23) mit waagerechter Schwenkachse (29) verschließbar ist.

6. Vorrichtung nach Anspruch 5, dadurch gekennzeichnet, daß die Klappe (23) in der Ruhestellung innen an der Wandung des Überführungskanals (22) anliegt oder einen Teil der Kanalwandung bildet.

7. Vorrichtung nach Anspruch 5, dadurch gekennzeichnet, daß die Klappe (23) in der Wirkstellung von ihrer Schwenkachse (29) aus gesehen schräg nach oben verläuft (Fig. 1 und 2).

8. Vorrichtung nach Anspruch 5, dadurch gekennzeichnet, daß die Klappe (23) im Bereich ihrer Schwenkachse (29) und/oder am freien Ende im Bereich der Wandung des Überführungskanals (22) mit Dichtungsleisten (27) versehen ist oder derartige Leisten an diesen Stellen der Klappe (23) wirksam sind.

9. Vorrichtung nach Anspruch 5, dadurch gekennzeichnet, daß sich außerhalb des Überführungskanals (22) hinter der Schwenkachse (29) der Klappe (23) eine nach hinten abfallende Schräge (32) befindet.

10. Vorrichtung nach Anspruch 7, dadurch gekennzeichnet, daß die Klappe (23) in der Wirkstellung mit ihrem freien Ende auf einem festen Widerlager (26) des Überführungskanals (22) aufliegt.

11. Verfahren zur Herstellung von Kautschukmischungen unter Verwendung einer Vorrichtung nach Anspruch 1, dadurch gekennzeichnet, daß der Hohlraum des Fertigmischers erst nach Zugabe der reaktiven Stoffe zu der schon eingebrachten Grundmischung evakuiert wird.

12. Verfahren zur Herstellung von Kautschukmischungen unter Verwendung einer Vorrichtung nach Anspruch 1, dadurch gekennzeichnet, daß die Rotoren des Fertigmischers im Vergleich zu den Rotoren des Grundmischers langsamer drehend betrieben werden und die Mischkammer des Fertigmischers nur zum Teil gefüllt wird.

13. Vorrichtung nach Anspruch 1 und 4, dadurch gekennzeichnet, daß mit der Betätigung des Verschlusses oberhalb der Absaugöffnungen (25) ein hermetisch verschlossener Hohlraum oberhalb der Kautschukmischung in der Mischkammer (19) des Fertigmischers (4) bewirkt ist.

## Claims

1. Apparatus for producing rubber mixtures, having a chargewisely operating ram-type masticator as the basic mixer (1) and a likewise chargewisely operating final mixer (4), which is situated beneath the basic mixer and has a greater capacity than the basic mixer (1), said final mixer leading to the transfer duct (22), which extends from the basic mixer (1) in a substantially perpendicular manner, for the basic mixture prepared by the basic mixer (1), for transfer into the mixing chamber (19) of the final mixer (4), which chamber has rotors (20), characterised in that the apparatus above the portion of the mixing chamber (19) of the final mixer (4), which is filled with the rubber mixture, is provided with one or a plurality of suction apertures (25) in the cavity walls, the suction apertures (25) either traversing the walls of the mixing chamber (19) or being provided in the transfer duct (22).

2. Apparatus according to claim 1, characterised in that the suction apertures (25), or respectively the associated pipe connections (24), extend inclinedly upwardly in such a manner that their lowermost portion is the portion facing the transfer duct (22).

3. Apparatus according to claim 1, characterised in that the pipe connections (24), which form the suction apertures (25), have associated therewith gas washers and/or refrigerating means in order to remove the volatile proportions from the sucked-off or evacuated volume.

4. Apparatus according to claim 1, characterised in that the transfer duct (22) is tightly sealable above the suction apertures (25).

5. Apparatus according to claim 4, characterised in that the transfer duct (22) is sealable by a flap (23) having a horizontal pivotal axle (29).

6. Apparatus according to claim 5, characterised in that, in its inoperative position, the flap (23) abuts internally against the wall of the transfer duct (22) or forms a portion of the duct wall.

7. Apparatus according to claim 5, characterised in that, in its operative position, the flap (23) extends inclinedly upwardly when viewed from its pivotal axle (29) (Figs. 1 and 2).

8. Apparatus according to claim 5, characterised in that, in the region of its pivotal axle (29) and/or at the free end in the region of the wall of the transfer duct (22), the flap (23) is provided with sealing strips (27), or such strips are effective at these locations of the flap (23).

9. Apparatus according to claim 5, characterised in that a rearwardly descending inclination (32) is situated externally of the transfer duct (22) behind the pivotal axle (29) of the flap (23).

10. Apparatus according to claim 7, characterised in that, in its operative position, the flap (23) rests with its free end on a fixed abutment (26) of the transfer duct (22).

11. Method of producing rubber mixtures by employing an apparatus according to claim 1, characterised in that the cavity of the final mixer is only evacuated after the reactive substances have been added to the already introduced basic mixture.

12. Method of producing rubber mixtures by employing an apparatus according to claim 1, characterised in that the rotors of the final mixer are operated so as to rotate more slowly than the rotors of the basic mixer, and the mixing chamber of the final mixer is only partially filled.

13. Apparatus according to claims 1 and 4, characterized in that a hermetically sealed cavity is achieved above the rubber mixture in the mixing chamber (19) of the final mixer (4) by the actuation of the closure above the suction apertures (25).

## Revendications

1. Dispositif pour produire des mélanges de caoutchouc, comprenant un pétrin à poinçon, fonctionnant de façon discontinue, comme mélangeur de base (1) et un mélangeur finisseur (4) sous-jacent, fonctionnant également de façon discontinue, qui présente une plus grande contenance que le mélangeur de base (1) et vers lequel mène, à partir du mélangeur de base (1), un canal de transfert (22) essentiellement vertical pour délivrer le mélange élémentaire produit par le mélangeur de base (1) à la chambre de mélange (19), contenant des rotors (20), du mélangeur finisseur (4), caractérisé en ce qu'il est pourvu, au-dessus de la partie de la chambre de mélange (19) du mélangeur finisseur (4) remplie par le mélange de caoutchouc, d'un ou plusieurs orifices d'aspiration (25) ménagés dans les parois délimitant l'espace intérieur, orifices d'aspiration (25) qui traversent les parois de la chambre de mélange (19) ou sont ménagés dans le canal de transfert (22).

2. Dispositif selon la revendication 1, caractérisé en ce que les orifices d'aspiration (25) ou les conduits (24) correspondants s'étendent obliquement vers le haut, de manière que leur partie dirigée vers le canal de transfert (22) soit située le plus en bas.

3. Dispositif selon la revendication 1, caractérisé en ce que les conduits (24) formant les orifices d'aspiration (25), sont coordonnés à des laveurs de gaz et/ou des dispositifs de congélation destinés à l'élimination des fractions volatiles des volumes aspirés ou évacués.

4. Dispositif selon la revendication 1, caractérisé en ce que le canal de transfert (22) peut être fermé de manière étanche au-dessus des orifices d'aspiration (25).

5. Dispositif selon la revendication 4, caractérisé en ce que le canal de transfert (22) peut être fermé par une trappe (23) ayant un axe de basculement (29) horizontal.

6. Dispositif selon la revendication 5, caractérisé en ce que, à la position de repos, la trappe (23) s'applique contre le côté intérieur de la paroi du canal de transfert (22) ou forme une partie de la paroi de ce canal.

7. Dispositif selon la revendication 5, caractérisé en ce que, à la position active, la trappe (23) est orientée obliquement vers le haut à partir de son axe de basculement (29) (figures 1 et 2).

8. Dispositif selon la revendication 5, caractérisé en ce que la trappe (23) est pourvue de barrettes d'étanchéité (27) dans la zone de son axe de basculement (29) et/ou à l'extrémité libre dans la zone de la paroi du canal de transfert (22), ou que de telles barrettes agissent à ces endroits de la trappe (23).

9. Dispositif selon la revendication 5, caractérisé en ce qu'un plan incliné (32) se trouve à l'extérieur du canal de transfert (22) derrière l'axe de basculement (29) de la trappe (23), plan qui descend vers l'arrière.

10. Dispositif selon la revendication 7, caractérisé en ce que, à la position active, la trappe (23) repose par son extrémité libre sur un appui fixe (26) prévu dans le canal de transfert (22).

11. Procédé pour produire des mélanges de caoutchouc en utilisant un dispositif selon la revendication 1, caractérisé en ce que l'on évacue l'espace intérieur du mélangeur finisseur seulement après addition des subtances réactives au mélange de base introduit préalablement.

12. Procédé pour produire des mélanges de caoutchouc en utilisant un dispositif selon la revendication 1, caractérisé en ce que l'on fait tourner les rotors du mélangeur finisseur plus lentement que les rotors du mélangeur de base et on remplit la chambre de mélange du mélangeur finisseur en partie seulement.

13. Dispositif selon les revendications 1 et 4, caractérisé en ce que la manoeuvre de la fermeture audessus des orifices d'aspiration (25), crée un espace fermé hermétiquement au-dessus du mélange de caoutchouc contenu dans la chambre de mélange (19) du mélangeur finisseur (4).
